# EUROPÄISCHE PATENTANMELDUNG

(11) **EP 4 342 764 A1**
(43) Veröffentlichungstag der Anmeldung: **27.03.2024**
(21) Anmeldenummer: 22020451.5
(22) Anmeldetag: 20.09.2022
(51) Int. Cl.: B61L 1/20, B61L 5/02, B61L 5/06, B61L 27/53

(54) **VERFAHREN ZUM ÜBERWACHEN EINER SCHIENENWEICHE SOWIE WEICHENANTRIEB**

(71) Anmelder: voestalpine Signaling Austria GmbH, 8740 Zeltweg (AT); iNDTact GmbH, 97076 Würzburg (DE)
(72) Erfinder: Bernerstätter, Robert, 8740 Zeltweg (AT); Petricevic, Raino, 97074 Würzburg (DE); Launer, Clemens, 97074 Würzburg (DE)
(74) Vertreter: Keschmann, Marc

(57) **Zusammenfassung**

Ein Verfahren zum Überwachen einer Schienenweiche mit einem Weichenantrieb, wobei der Weichenantrieb ein Gehäuse, einen im Gehäuse angeordneten Weichenstellmotor und eine aus dem Gehäuse herausgeführte Stellstange zum Ankoppeln an eine Schienenweiche umfasst, umfasst:
- Vorsehen eines am Gehäuse angeordneten piezoelektrischen Sensors,
- Erfassen von Messsignalen des piezoelektrischen Sensors während eines Stellbetriebs des Weichenantriebs, wobei die Messsignale für eine nicht-periodische Veränderung der Dehnung des Gehäuses repräsentativ sind, und
- Auswerten eines zeitlichen Verlaufs der Messsignale, um Abweichungen von einem Sollzustand zu identifizieren.

## Beschreibung

Die Erfindung betrifft ein Verfahren zum Überwachen einer Schienenweiche mit einem Weichenantrieb, wobei der Weichenantrieb ein Gehäuse, einen im Gehäuse angeordneten Weichenstellmotor und eine aus dem Gehäuse herausgeführte Stellstange zum Ankoppeln an eine Schienenweiche umfasst.

Weiters betrifft die Erfindung einen Weichenantrieb zur Durchführung des erfindungsgemäßen Verfahrens.

Weichendiagnosesysteme ermöglichen es den Betreibern von Schienennetzen, sich anbahnende Schäden verschiedenster Komponenten einer Weiche, insbesondere des Weichenantriebs, frühzeitig zu erkennen und dadurch Weichenausfälle zu vermeiden und Wartungsprozesse zu optimieren. Weichenausfälle können aus mechanischen, umweltbedingten, hydraulischen oder elektrischen Problemen resultieren und führen oft zu langzeitigen Ausfällen des betroffenen Gleisabschnitts.

Zur Fernüberwachung von Weichenantrieben sind verschiedene Verfahren vorgeschlagen worden, welche darauf abzielen, eine Umstellung der Weiche zu überwachen und aus dem zeitlichen Verlauf der erfassten Messgröße während des Stellbetriebs und ggf. aus einem Vergleich des Verlaufs mit Sollwerten, einen Verschleißzustand zu erkennen.

Andere bekannte Verfahren nutzen hierzu Sensoren im Stellwerk, welche den Stromfluss zu den Weichenstellmotoren des Weichenantriebs überwachen. Für jeden Umstellvorgang werden die Stromverlaufskurven gemessen und an eine Auswerteeinheit gesendet, wo die Daten anhand von individuell je Weiche eingestellten Parametern und Anwenderregeln analysiert werden. Die Messung des Stromflusses hat den Vorteil, dass die Überwachung vom Stellwerk aus erfolgen kann, sodass ein Eingriff in den Weichenantrieb nicht erforderlich ist. Nachteilig ist jedoch, dass Stromverlaufskurven lediglich allgemeine Aussagen über den Zustand der Weiche einschließlich des Weichenantriebs erlauben ohne eine Ferndiagnose hinsichtlich der Fehlerursache treffen zu können.

Eine genauere Lokalisierung von Verschleißerscheinungen oder Fehlzuständen wird durch die Anordnung von Sensoren an verschiedenen Komponenten des Weichenantriebs selbst ermöglicht, wie z.B. Dehnungsmesssensoren an Stellstangen oder Kraftmessbolzen als Verbindungselement zwischen einer Stellstange und der Antriebsstange der Weiche, mit denen eine Messung der Stellkraft ermöglicht wird. Derartige Sensoren erfordern eine Verkabelung an beweglichen außenliegenden Teilen des Weichenantriebs und sind daher fehleranfällig und aufwendig in der Installation.

Zur Überwindung dieser Nachteile sind bereits Überwachungssysteme vorgeschlagen worden, bei denen die Sensorik am stationären Gehäuse des Weichenantriebs statt auf beweglichen Teilen angeordnet werden kann. Beispielsweise offenbart die WO 2019/063263 A1 ein Verfahren zum Analysieren des Weichenantriebs einer Schienenweiche mit einem Sensor zur Messung von Schallwellen während eines Stellbetriebs des Weichenantriebs, wobei eine Stellkraft einer Stellkraftkupplung des Weichenantriebs auf Grund der erfassten Schallwellen ermittelt wird. Der Sensor kann hierbei als piezoelektrischer Sensor oder als akustischer Oberflächenwellen-Sensor ausgebildet sein. Nachteilig bei der Erfassung von Schallwellen ist die Schwierigkeit, Auffälligkeiten im Schallsignal mit einer bestimmten Fehlerquelle in Verbindung zu bringen. Meist sind Störfrequenzen hierfür verantwortlich, die nicht ohne weiteres herausgefiltert werden können. Ein Problem stellt auch das Auftreten unvorhergesehener Störfrequenzen dar, die zufällig in einem mit einer bestimmten Fehlerquelle oder Stellkraft assoziierten Signalbereich liegen, bzw. diesen Signalbereich verzerren können. Die Ermittlung der Stellkraft über Schallwellen erfordert außerdem eine regelmäßige Kalibrierung, da die Messwerte andernfalls nicht langzeitstabil und damit nicht zuverlässig sind.

Eine andere Möglichkeit ist in der EP 3269615 A1 offenbart, bei der ein faseroptischer Sensor am Gehäuse des Weichenantriebs angebracht ist, um einen Parameter, wie z.B. eine Dehnung, zu erfassen, der den Zustand des Weichenantriebs anzeigt. Faseroptische Sensoren sind jedoch für den Einsatz unter den rauen Bedingungen im Bereich eines Weichenantriebs nur bedingt geeignet. Faseroptische Sensoren erfordern einen sogenannten Interrogator, der teuer ist und aufgrund seiner Größe nicht in einen Weichenantrieb integrierbar ist. In der Praxis wird ein Interrogator daher für mehrere Messstellen an einer zentralen Stelle außerhalb des Weichenantriebgehäuses gesondert eingehaust und über Lichtwellenleiter mit den einzelnen faseroptischen Sensoren verbunden. Die empfindlichen Lichtwellenleiter müssen dann über weitere Strecken vor mechanischen Einflüssen geschützt verlegt werden, was ebenfalls einen beträchtlichen Aufwand darstellt. Speziell bei der notwendigen Genauigkeit und Reproduzierbarkeit der Messungen in diesem Anwendungsfeld müssen Lichtwellenleiter mit deren Ankopplungen unter Werkstattbedingungen in den erforderlichen Längen vorkonfektioniert werden. Besonders eine nachträgliche Nachrüstung an bereits verbauten Weichenantrieben ist damit schwierig und teuer.

Ein weiterer Nachteil faseroptischer Sensoren liegt in der geringeren Empfindlichkeit in der Erfassung von Verformungsamplituden. Beim Versagen oder Abreißen von Bauteilen entstehen sogenannte "Bursts", die von einem faseroptischen Sensor nicht ausreichend aufgelöst werden können. Ebenso gibt es Anteile von Lagergeräuschen (z.B. "Pitting") und Reibgeräusche (z.B. bei Entfettung), die von faseroptischen Sensoren nicht abgedeckt werden. Ein weiterer Nachteil von faseroptischen Sensoren liegt in deren Beeinträchtigung durch die Veränderung der Dehnung mit der Änderung der Temperatur. Abseits einer bestimmten kalibrierten Temperatur muss ein Offset ständig kompensiert werden. Die Kompensation wird durch die Tatsache erschwert, dass der Einfluss der Temperatur ohne weiteres in der Größenordnung der Messwerte oder auch darüber liegen kann.

Die vorliegende Erfindung zielt daher darauf ab, eine verbesserte Überwachung von Weichen zu ermöglichen, mit welcher die oben genannten Nachteile überwunden werden können. Insbesondere zielt die Erfindung darauf ab, eine Überwachung der Weiche ohne gesondert einzuhausende externe Bauteile zu ermöglichen, wobei das Ausmaß des konstruktiven Eingriffs in bestehende Komponenten einer Weiche minimiert und auch eine einfache Nachrüstung bestehender Weichen gewährleistet werden soll. Weiters soll die Überwachung in der Lage sein, Fehlerursachen zu identifizieren und gezielte Instandhaltungsmaßnahmen zu empfehlen.

Zur Lösung dieser Aufgaben wird gemäß einem ersten Aspekt der Erfindung ein Verfahren zum Überwachen einer Schienenweiche mit einem Weichenantrieb bereitgestellt, umfassend das Vorsehen eines am Gehäuse angeordneten piezoelektrischen Sensors, das Erfassen von Messsignalen des piezoelektrischen Sensors vorzugsweise während eines Stellbetriebs des Weichenantriebs, wobei die Messsignale für eine nicht-periodische Veränderung der Dehnung des Gehäuses repräsentativ sind, und das Auswerten eines zeitlichen Verlaufs der Messsignale, um Abweichungen von einem Sollzustand zu identifizieren.

Die Erfindung beruht somit auf der Idee einen piezoelektrischen Sensor zu verwenden und geeignete Messwerte zu erfassen, die für die Weichendiagnose herangezogen werden können, wobei sich herausgestellt hat, dass die Anordnung eines solchen Sensors am Gehäuse des Weichenantriebs ausreichend ist, um relevante Ergebnisse zur erhalten. Insbesondere wurde gefunden, dass ein piezoelektrischer Sensor für die Erfassung von nicht-periodischen Änderungen der Dehnung des Gehäuses genutzt werden kann, wobei die Dehnung als Maß für die mechanische Belastung des Gehäuses herangezogen werden kann und von dieser auf den Zustand der Weiche geschlossen werden kann.

Nicht periodische Änderungen der Dehnung des Gehäuses umfassen hierbei insbesondere langsame bzw. quasistatische Dehnungsänderungen, die durch Kräfte verursacht werden, die beim Umstellvorgang der Weiche auf das Gehäuse des Weichenantriebs einwirken. Da das Gehäuse als Widerlager für die bei einem Umstellvorgang belasteten Teile der Weiche einschließlich des Weichenantriebs fungiert, führt eine Belastung zu einer entsprechenden Spannung und folglich zu einer Verformung bzw. Dehnung bestimmter Bereiche des Gehäuses. Die Verformung des Gehäuses tritt hierbei besonders in Gehäusebereichen auf, die im Kraftübertragungspfad liegen. Bei Kenntnis des oberflächlichen Dehnungsverhaltens des Gehäuses an einer gewissen Stelle in Abhängigkeit einer Belastung kann über die Messung der Dehnung an der gewissen Stelle auf den Schwergang der Weiche zurückgeschlossen werden.

Der piezoelektrische Sensor wird daher an einer Stelle am Gehäuse angeordnet, die im Kraftübertragungspfad einer üblicherweise auf das Gehäuse veränderlich wirkenden Kraftkomponente liegt. Insbesondere kann der piezoelektrische Sensor an einer Stelle angeordnet werden, an der die auf Grund der einwirkenden Kraft auftretende Dehnung des Gehäuses mindestens 0,1 peps (pm/m) beträgt.

Beispielsweise kann der piezoelektrische Sensor möglichst nahe an einem axial festen Spindellager eines elektromotorisch angetriebenen Spindelantriebs zur Verstellung einer Stellstange und ggf. möglichst nahe der Verschraubung des Weichenantriebsgehäuses mit der Weiche angeordnet werden. Bei hydraulisch angetriebenen Weichen kann der piezoelektrische Sensor möglichst nahe des elektrohydraulischen Befestigungspunkts des Antriebsmoduls angeordnet werden.

Bevorzugt ist der piezoelektrische Sensor hierbei entlang der Hauptdehnungsrichtung an der Stelle des Gehäuses orientiert.

Bevorzugt wird das piezoelektrische Substrat des Sensors kraft- und/oder stoffschlüssig mit der Gehäuseoberfläche gekoppelt, sodass die Dehnung des Gehäuses anteilig auf den piezoelektrischen Sensor übertragen wird. Im Falle einer stoffschlüssigen Verbindung ist insbesondere eine Klebeverbindung von Vorteil.

Der Vorteil der Verwendung eines piezoelektrischen Sensors liegt untere anderem in der überaus hohen Messempfindlichkeit. Die Messergebnisse eines piezoelektrischen Sensors sind zwar temperaturabhängig, dies jedoch nur in geringem Maße. Die Temperaturempfindlichkeit verursacht im Gegensatz zu einem faseroptischen Sensor keinen Offset-Drift bei der Messung einer Dehnung, sondern beispielsweise eine Verstärkung oder Abschwächung einer gemessenen Amplitude einer Schwingung. Bei in der Praxis stark schwankenden Temperaturen ist ein piezoelektrischer Sensor folglich einfacher auszuwerten und zuverlässiger, was die Genauigkeit betrifft. Die Temperaturkompensation der Messwerte erfolgt softwarebasiert auf Basis der Temperaturkennlinie des Sensors.

Ähnlich robust verhält sich ein piezoelektrischer Sensor bei einer Änderung der Ankoppelungseigenschaften an den Untergrund, was für zuverlässige Messungen der Sensorik mit möglichst wenigen Interventionen über viele Jahre eine Rolle spielt. Eine sich aus der Ankopplung ergebende, sich verändernde Vorspannung (z.B. chemisch-mechanische Veränderung einer Verklebung) wirkt sich ähnlich wie die thermische Dehnung nicht als Offset-Drift aus.

Der piezoelektrische Sensor kann an der Außenseite oder an der Innenseite des Gehäuses angeordnet werden. Vorteilhaft ist die Anordnung an der Innenseite des Gehäuses, da hierdurch eine vor äußeren Umwelteinflüssen geschützte Anordnung gewährleistet ist. Auf Grund der kleinbauenden Ausbildung von piezoelektrischen Sensoren kann ein derartiger Sensor ohne Beeinträchtigung anderer Komponenten innenseitig platziert werden. Allfällige elektromagnetische Störungen aus dem Eisenbahnbetrieb lassen sich kostengünstig mit geringem Materialaufwand durch Abschirmungen fernhalten. Damit wird auch eine Vorverarbeitung bzw. komplette Auswertung der Messsignale im Inneren eines Weichenantriebs ermöglicht.

Sowohl bei einer Anordnung an der Außenseite als auch an der Innenseite des Gehäuses ist eine einfache Nachrüstbarkeit gegeben, da keine Ankoppelung an bewegte Bauteile und ein geringer Verkabelungsaufwand gegeben sind. Ebenso ist eine einfache Austauschbarkeit im Falle einer Beschädigung des Sensors gewährleistet.

Im Vergleich zu faseroptischen Sensoren erfordert ein piezoelektrischer Sensor keine Verkabelung mit einem externen Auswertemodul. Vielmehr kann die Auswertung der Messsignale mit einer kleinbauenden elektronischen Schaltung vorgenommen werden, welche in unmittelbarer Nähe des Sensors am oder im Gehäuse des Weichenantriebs angeordnet werden kann oder welche mit dem piezoelektrischen Sensor zu einer integrierten Einheit vereinigt werden kann.

Piezoelektrische Sensoren sind in der Lage, kleinste Verformungen oder Dehnungsänderungen in elektrische Signale umzuwandeln, sodass z.B. auch durch Körperschall induzierte Dehnungsänderungen erfasst werden. Das vom Sensor ausgegebene Signal kann daher grundsätzlich hochfrequente Anteile und niederfrequente Anteile aufweisen. Allerdings sind piezoelektrische Sensoren für den Einsatz bei rein statischen Messungen schlechter geeignet. Eine statische Kraft führt zu einer definierten Ladungsmenge an der Oberfläche des piezoelektrischen Materials. Wird diese Ladung beispielsweise mit einem handelsüblichen Ladungsverstärker gemessen, gehen aufgrund der nicht unendlich hohen Eingangsimpedanz kontinuierlich Ladungen verloren, was zu einem kontinuierlichen Signalabfall führt. Sehr langsam ablaufende Dehnungsänderungen führen daher nicht zu einer Kumulierung der Ladungsmengen, sodass kein die Gesamtänderung repräsentierendes Signal erhalten wird. Bei der Messung von periodischen, insbesondere hochfrequenten Dehnungsänderungen ist dieser Effekt weniger ausgeprägt bzw. nachrangig.

Um nun im Rahmen der Erfindung ein die nicht-periodische Veränderung der Dehnung repräsentierendes Messsignal zu erhalten, wird vorzugsweise so vorgegangen, dass periodische Anteile des Messsignals zumindest teilweise herausgefiltert werden. Eine bevorzuge Ausbildung sieht in diesem Zusammenhang vor, dass die die nicht-periodische Veränderung der Dehnung repräsentierenden Messsignale durch eine Tiefpassfilterung erhalten werden, wobei die Tiefpassfilterung mit einer Grenzfrequenz erfolgt, bei welcher einem Körperschall entsprechende periodische, vorzugsweise eine Frequenz von > 100 Hz aufweisende, Signalanteile des piezoelektrischen Sensors zumindest teilweise entfernt oder gedämpft werden. Die Tiefpassfilterung kann durch herkömmliche analoge und/oder digitale Signalverarbeitungsverfahren realisiert werden.

Nach der Filterung hochfrequenter Singalanteile verbleibt ein Messsignal, das eine quasistatische Verschiebung des hochfrequenten Signalanteils darstellt und für eine Verformung des Gehäuses auf Grund der während des Umstellvorganges der Weiche auf das Gehäuse wirkenden mechanischen, nicht-schwingenden Belastung repräsentativ ist. Um dem Effekt entgegenzuwirken, dass langsam ablaufende Dehnungsänderungen von einem piezoelektrischen Sensor auf Grund des schnellen Ladungsverlusts nicht als kumulatives Signal ausgegeben werden, sieht eine bevorzugte Ausbildung der Erfindung vor, dass die die nicht-periodische Veränderung der Dehnung repräsentierenden Messsignale mittels eines Ladungsverstärkers verstärkt werden.

Gemäß einer besonders bevorzugten Ausführungsform der Erfindung wird nicht nur der nicht-periodische quasistatische Signalanteil für die Überwachung der Weiche eingesetzt, sondern auch die einem Körperschall entsprechenden, periodischen Signalanteile. Diesbezüglich ist bevorzugt vorgesehen, dass zusätzlich Messsignale des piezoelektrischen Sensors erfasst und ausgewertet werden, welche Körperschallwellen repräsentieren. Unter Körperschallwellen werden im Rahmen der Erfindung mechanische Schwingungen (z.B. > 100Hz) verstanden, die sich von einer Schallquelle ausgehend über längere Strecken durch mechanisch miteinander gekoppelte Bauteile ausbreiten können und über die Oberfläche des Gehäuses abgreifbar sind. Die Schallquelle kann hierbei im Gehäuse selbst liegen oder von einer außerhalb des Gehäuses liegenden Komponente der Weiche, wie z.B. einer Stellstange, einer Zungenschiene, einem gelockerten Befestigungselement, einer Rollenvorrichtung, einem Weichenverschluss, einer Zungenvorrichtungen oder dgl., insbesondere von einer mit dem Gehäuse des Weichenantriebes akustisch gekoppelten Komponente, gebildet sein. Der Körperschall kann durch Vibrationen einer Komponente der Weiche verursacht sein und die Vibrationen können wiederum von einem Reibkontakt zwischen Komponenten herrühren. Alternativ können Vibrationen als auch Verformungen von einem über die Weiche fahrenden Zug verursacht sein und ebenso ausgewertet werden. Da dabei andere Anregungen auf die Komponenten der Weiche bzw. des Weichenantriebs einwirken, können auch Fehlerquellen angeregt werden, die bei einem alleinigen Umstellbetrieb der Weiche nicht ausreichend festgestellt würden.

Körperschallwellen mit einer Bandbreite von f (z.B. 20 kHz) sind nur mit einer Abtastrate von mindestens 2f (bezogen auf das Beispiel also mindestens 40 kHz) erfassbar.

Eine geeignete Analyse oder Auswertung der den Körperschall repräsentierenden Messsignale, insbesondere in Kombination mit dem nicht-periodischen quasistatischen Signalanteil, erlaubt die Identifizierung charakteristischer Merkmale der Schwingung bzw. des korrespondierenden Körperschalls, was wiederum einen Rückschluss auf eine mögliche Quelle der Schwingungen erlaubt. Dadurch lassen sich Fehlerquellen besser verorten und es können Fehlerursachen besser voneinander unterschieden werden. In einer bevorzugten Ausführung ermöglicht eine kombinierte Auswertung der den Körperschall repräsentierenden Messsignale und der den nicht-periodischen quasistatischen Signalanteile, insbesondere der jeweiligen während des Umstellbetriebs und während einer Zugüberfahrt erfassten Signale, das Erkennen einer Fehlerquelle, die weder im Umstellbetrieb alleine, noch bei der Überfahrt alleine eindeutig erkannt hätte werden können.

In Bezug auf die Erfassung von Körperschall repräsentierenden Messsignalen ist als Vorteil von piezoelektrischen Sensoren hervorzuheben, dass derartige Sensoren eine Messempfindlichkeit aufweisen, die ein bis zwei Größenordnungen höher ist als bei faseroptischen Sensoren. Das bedeutet, dass ein piezoelektrischer Sensor eine Schwingung mit einer 10- bis 100-fach kleinerer Amplitude erfassen kann als ein faseroptischer Sensor. Ein piezoelektrischer Sensor ist folglich besonders für das Messen von Körperschallwellen geeignet. Außerdem verfügt ein piezoelektrischer Sensor über eine höhere Bandbreite von bis zu mehreren MHz. Insgesamt wird mit einem piezoelektrischen Sensor daher ein Signal mit deutlich höherem Informationsgehalt erzielt.

Eine hohe Messempfindlichkeit ist für eine aussagekräftige Analyse der Weiche bzw. von deren vom Weichenantriebsgehäuse abzutastenden Komponenten während einer Zugüberfahrt wichtig, besonders wenn die akustische Kopplung zwischen Weiche und Weichenantriebsgehäuse in der Endlage des Weichenantriebs nur schwach ausgebildet wird.

Eine hohe Messempfindlichkeit ist auch für die Erfassung von beim Versagen oder Abreißen von Bauteilen entstehenden sogenannte "Bursts", eine hochfrequente Form von Körperschall im MHz-Bereich, nützlich, die von einem faseroptischen Sensor nicht ausreichend aufgelöst werden kann. Dasselbe gilt für Frequenzanteile von Lagergeräuschen (z.B. "Pitting") und Reibgeräusche (z.B. bei Entfettung), die vom Frequenzband eines piezoelektrischen Sensors gut abgedeckt werden.

Die Erfassung und/oder Aufzeichnung der die nicht-periodischen Veränderungen der Dehnung des Gehäuses repräsentierenden Messsignale und der die Körperschall repräsentierenden Messsignale kann hintereinander, einzeln, oder gleichzeitig erfolgen.

Die Erfassung und/oder Aufzeichnung der die nicht-periodischen Veränderungen der Dehnung des Gehäuses repräsentierenden Messsignale und/oder der die Körperschall repräsentierenden Messsignale erfolgt bevorzugt während des Stellbetriebs, d.h. während der Umstellung der Weiche.

Alternativ lassen sich außerhalb des Stellvorgangs mit dem erfindungsgemäßen Verfahren auch Auswirkungen vorbeifahrender Züge detektieren. Beispielsweise können neben dem Verlauf einer mechanischen Belastung mit ein und demselben piezoelektrischen Sensor auch Durchfahrten von Zügen erfasst und anhand der Schwingungssignale und/oder Weichenstellung klassifiziert werden.

Eine Weiterbildung der Erfindung sieht vor, dass zusätzlich zum bisher erwähnten piezoelektrischen Sensor wenigsten ein weiterer piezoelektrischer Sensor am Gehäuse angeordnet ist, dessen Messignale auf dieselbe Art und Weise erfasst und ausgewertet werden können, wie dies oben in Bezug auf den einen piezoelektrischen Sensor beschrieben wurde. Die Anordnung von zwei oder mehr piezoelektrischen Sensoren erlaubt einerseits für den Fall eines Sensorausfalls eine redundante Ausbildung und kann andererseits dem Umstand Rechnung tragen, dass Dehnungen in unterschiedlichen Bereichen des Gehäuses unterschiedlich stark ausgeprägt sind. Mit mehreren Sensoren gelingt somit eine vollständigere Erfassung des relativen (d.h. nicht absoluten) Belastungs- bzw. Verformungszustandes des Gehäuses und damit der Weiche.

Wie bereits erwähnt umfasst die Zustandsdiagnose der Weiche eine Auswertung eines zeitlichen Verlaufs der Messsignale, um Abweichungen von einem Sollzustand zu identifizieren. Dies beruht auf der Erkenntnis, dass der Verlauf des Verformungssignals an einer festen Position des Gehäuses während eines sich wiederholenden Stellvorgangs für einen Stellprozess charakteristisch ist wie ein Fingerabdruck. Entsprechend resultieren Veränderungen des Stellprozesses in einer Veränderung in Amplitude und Verlauf des Verformungssignals. Solche Veränderungen des Stellprozesses können unter anderem bedingt sein durch Ermüdung, Abnutzung, Lockerung, Entfettung, Defekte (z.B. in der Steuerelektronik), Stromschwankungen, und/oder durch äußere Einflüsse. Hierbei genügt es die relative Veränderung des Verformungssignals bzgl. eines Referenzsignalverlaufs zu überwachen. Ein solches Referenzsignal kann beispielsweise im Anfangs- oder Neuzustand des Weichenantriebs aufgezeichnet und abgespeichert werden. Gleichermaßen kann die Aufzeichnung eines Referenzsignals nach einer Erstinbetriebnahme, nach einer Inspektion oder nach einer Wartung erfolgen. Eine Kalibrierung ist nicht notwendig, da es nur auf Änderungen oder qualitative Signaturen in Bezug auf den Referenzzustand bzw. die Referenzsignatur ankommt.

In den erfindungsgemäß gewonnenen Verformungssignalen zusammen mit der Referenzmessung sind damit sämtliche Informationen zur Beurteilung des Stellverhaltens und des Zustands von Weichenstellantrieben und Weichenkomponenten enthalten.

Eine bevorzugte Ausbildung der Erfindung sieht in diesem Zusammenhang vor, dass eine Amplitude des zeitlichen Verlaufs der Messsignale ermittelt und mit einem Sollwert verglichen wird, wobei der zeitliche Verlauf in für den Vorgang der Weichenumstellung typische Teilbereiche gegliedert werden kann, um Fehlermodi besser zuordnen zu können.

Gemäß einer bevorzugten Ausbildung wird aus den die nicht-periodische Veränderung der Dehnung repräsentierenden Messsignalen ein Maß für den Schwergang der Weiche ermittelt. Der Schwergang kann hierbei als absolutes oder als relatives Maß angegeben werden und stellt den Widerstand dar, den die beweglichen Komponenten der Weiche beim Umstellvorgang dem Antrieb entgegensetzen. Der Schwergang korreliert somit mit der auf den Weichenantrieb während des Umstellvorgangs wirkenden Gegenkraft. Im Gegensatz zu einer nur mit kalibrierter Sensorik messbaren (absoluten) Gegenkraft, die in Newton bemessen wird und auf Grundlage der vom piezoelektrischen Sensor erfassten Dehnung schwer zu beziffern ist, kann der Schwergang als relatives Maß zum Beispiel mit einer Änderung des Umstellwiderstands in Bezug auf zumindest einen Ausgangswert bzw. eine Ausgangskurve korreliert werden.

Eine weitere bevorzuge Ausbildung sieht vor, dass der zeitliche Verlauf der Messsignale während einer Vielzahl von Stellbetrieben aufgezeichnet wird und aus einem Vergleich der aufgezeichneten Verläufe ein Wartungsbedarf der Weiche, wie z.B. des Weichenantriebs, ermittelt wird.

Wie bereits erwähnt, können Messwerte des piezoelektrischen Sensors temperaturabhängig schwanken. Bevorzugt ist daher vorgesehen, dass Temperaturmesswerte eines Temperatursensors erfasst werden, welche für die Temperatur des Gehäuses im Bereich des piezoelektrischen Sensors repräsentativ sind, und dass die Temperaturmesswerte zur Kompensation von temperaturabhängigen Veränderungen der Messsignale des piezoelektrischen Sensors herangezogen werden.

Gemäß einem zweiten Aspekt der Erfindung wird ein Weichenantrieb bereitgestellt, mit dem das erfindungsgemäße Verfahren gemäß dem ersten Aspekt durchgeführt werden kann, und welches ein Gehäuse, einen im Gehäuse angeordneten Weichenstellmotor, eine aus dem Gehäuse herausgeführte Stellstange zum Ankoppeln an eine Schienenweiche, einen am Gehäuse angeordneten piezoelektrischen Sensor und eine Auswerteeinheit umfasst, welcher die Messsignale des piezoelektrischen Sensors zugeführt sind, wobei die Auswerteeinheit zum Erfassen und Aufzeichnen von Messsignalen des piezoelektrischen Sensors vorzugsweise während eines Stellbetriebs des Weichenantriebs ausgebildet ist, wobei die Messsignale für eine nicht-periodische Veränderung der Dehnung des Gehäuses repräsentativ sind, und die Auswerteeinheit zum Auswerten eines zeitlichen Verlaufs der Messsignale ausgebildet ist, um Abweichungen von einem Sollzustand zu identifizieren.

Wie bereits im Zusammenhang mit dem erfindungsgemäßen Verfahren ausgeführt, kann der piezoelektrische Sensor an einer Innenseite des Gehäuses angeordnet sein.

Bevorzugt ist ein Tiefpassfilter mit einer Grenzfrequenz vorgesehen, bei welcher einem Körperschall entsprechende periodische, vorzugsweise eine Frequenz von > 100 Hz aufweisende, Signalanteile des piezoelektrischen Sensors zumindest teilweise entfernt oder gedämpft werden, um die die nicht-periodische Veränderung der Dehnung repräsentierenden Messsignale zu erhalten.

Bevorzugt ist ein Ladungsverstärker vorgesehen, welcher die die nicht-periodische Veränderung der Dehnung repräsentierenden Messsignale verstärkt.

Bevorzugt ist die Auswerteeinheit ausgebildet, um die die nicht-periodische Veränderung der Dehnung repräsentierenden Messsignale durch Ermittlung quasistatischer Anteile des Sensorabgriffs zu erfassen.

Bevorzugt ist die Auswerteeinheit ausgebildet, um eine Amplitude des zeitlichen Verlaufs der Messsignale zu ermitteln und mit einem Sollwert zu vergleichen, wobei der zeitliche Verlauf in für den Vorgang der Weichenumstellung typische Teilbereiche gegliedert werden kann, um Fehlermodi besser zuordnen zu können.

Bevorzugt ist die Auswerteeinheit ausgebildet, um aus den die nicht-periodische Veränderung der Dehnung repräsentierenden Messsignalen ein Maß für den Schwergang der Weiche zu ermitteln.

Bevorzugt ist die Auswerteeinheit ausgebildet, um den zeitlichen Verlauf der Messsignale während einer Vielzahl von Stellbetrieben aufzuzeichnen und aus einem Vergleich der aufgezeichneten Verläufe ein Wartungsbedarf der Weiche, wie z.B. des Weichenantriebs, zu ermitteln.

Bevorzugt ist die Auswerteeinheit ausgebildet, um zusätzlich Messsignale des piezoelektrischen Sensors zu erfassen und auszuwerten, welche Körperschallwellen repräsentieren.

Bevorzugt ist ein Temperatursensor zur Erfassung der Temperatur des Gehäuses im Bereich des piezoelektrischen Sensors vorgesehen, dessen Temperaturmesswerte der Auswerteeinheit zur Kompensation von temperaturabhängigen Veränderungen der Messsignale des piezoelektrischen Sensors zugeführt sind.

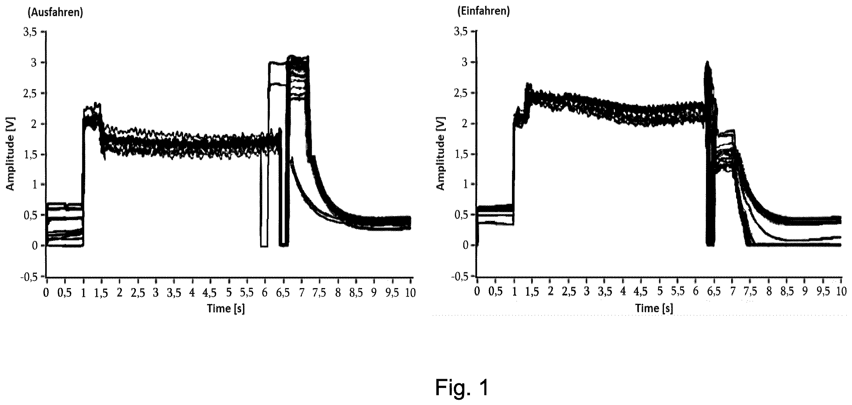

Die Erfindung wird nachfolgend anhand eines in der Zeichnung schematisch dargestellten Ausführungsbeispiels näher erläutert. Fig. 1 zeigt mehrere Verläufe, welche mittels eines am Gehäuse eines Weichenantriebs während den Umstellvorgängen mit einem piezoelektrischen Sensor gemessenen Dehnungen entsprechen. Das dargestellte Messignal wurde erhalten, indem hochfrequente Signalanteile des piezoelektrischen Sensors herausgefiltert wurden, sodass lediglich die nicht durch Körperschall induzierten quasistatischen Anteile verbleiben. Es sind jeweils Messignale aus einer Vielzahl von Umstellvorgängen übereinander dargestellt.

Die links in Fig. 1 dargestellte Kurvenschar entspricht dem Umstellvorgang, bei dem die Zungenschiene in die eine Richtung verschoben wird, und die rechts in Fig. 1 dargestellte Kurvenschar entspricht dem Umstellvorgang, bei dem die Zungenschiene in die entgegengesetzte Richtung verschoben wird. In letzteren Fall müssten die Werte eigentlich negativ dargestellt werden, es erfolgte jedoch eine Vorzeichenkorrektur durch die Auswerteeinheit. Es ist erkennbar, dass mit dem am Gehäuse des Weichenantriebs angeordneten piezoelektrischen Sensor der typische Belastungsverlauf erfasst werden kann, der bei fehlerfreier Weiche unter anderem durch eine Einschaltspitze, einen waagrechten Verlauf während der Umstellung der Weiche und einen steilen Abfall nach dem Verriegeln gekennzeichnet ist.

## Patentansprüche

1. Verfahren zum Überwachen einer Schienenweiche mit einem Weichenantrieb, wobei der Weichenantrieb ein Gehäuse, einen im Gehäuse angeordneten Weichenstellmotor und eine aus dem Gehäuse herausgeführte Stellstange zum Ankoppeln an eine Schienenweiche umfasst, wobei das Verfahren umfasst:
- Vorsehen eines am Gehäuse angeordneten piezoelektrischen Sensors,
- Erfassen von Messsignalen des piezoelektrischen Sensors vorzugsweise während eines Stellbetriebs des Weichenantriebs, wobei die Messsignale für eine nicht-periodische Veränderung der Dehnung des Gehäuses repräsentativ sind, und
- Auswerten eines zeitlichen Verlaufs der Messsignale, um Abweichungen von einem Sollzustand zu identifizieren.

2. Verfahren nach Anspruch 1, **dadurch gekennzeichnet, dass** der piezoelektrische Sensor an einer Innenseite des Gehäuses angeordnet ist.

3. Verfahren nach Anspruch 1 oder 2, **dadurch gekennzeichnet, dass** die die nicht-periodische Veränderung der Dehnung repräsentierenden Messsignale durch eine Tiefpassfilterung erhalten werden, wobei die Tiefpassfilterung mit einer Grenzfrequenz erfolgt, bei welcher einem Körperschall entsprechende periodische, vorzugsweise eine Frequenz von > 100 Hz aufweisende, Signalanteile des piezoelektrischen Sensors zumindest teilweise entfernt oder gedämpft werden.

4. Verfahren nach Anspruch 1, 2 oder 3, **dadurch gekennzeichnet, dass** die die nicht-periodische Veränderung der Dehnung repräsentierenden Messsignale mittels eines Ladungsverstärkers verstärkt werden.

5. Verfahren nach einem der Ansprüche 1 bis 4, **dadurch gekennzeichnet, dass** die Erfassung der die nicht-periodische Veränderung der Dehnung repräsentierenden Messsignale die Ermittlung quasistatischer Anteile des Sensorabgriffs umfasst.

6. Verfahren nach einem der Ansprüche 1 bis 5, **dadurch gekennzeichnet, dass** eine Amplitude des zeitlichen Verlaufs der Messsignale ermittelt und mit einem Sollwert verglichen wird.

7. Verfahren nach einem der Ansprüche 1 bis 6, **dadurch gekennzeichnet, dass** aus den die nicht-periodische Veränderung der Dehnung repräsentierenden Messsignalen ein Maß für den Schwergang der Weiche ermittelt wird.

8. Verfahren nach einem der Ansprüche 1 bis 7, **dadurch gekennzeichnet, dass** der zeitliche Verlauf der Messsignale während einer Vielzahl von Stellbetrieben aufgezeichnet wird und aus einem Vergleich der aufgezeichneten Verläufe ein Wartungsbedarf der Weiche, wie z.B. des Weichenantriebs, ermittelt wird.

9. Verfahren nach einem der Ansprüche 1 bis 8, **dadurch gekennzeichnet, dass** zusätzlich Messsignale des piezoelektrischen Sensors erfasst und ausgewertet werden, welche Körperschallwellen repräsentieren.

10. Verfahren nach einem der Ansprüche 1 bis 9, **dadurch gekennzeichnet, dass** Temperaturmesswerte eines Temperatursensors erfasst werden, welche für die Temperatur des Gehäuses im Bereich des piezoelektrischen Sensors repräsentativ sind, und dass die Temperaturmesswerte zur Kompensation von temperaturabhängigen Veränderungen der Messsignale des piezoelektrischen Sensors herangezogen werden.

11. Weichenantrieb umfassend ein Gehäuse, einen im Gehäuse angeordneten Weichenstellmotor, eine aus dem Gehäuse herausgeführte Stellstange zum Ankoppeln an eine Schienenweiche, einen am Gehäuse angeordneten piezoelektrischen Sensor und eine Auswerteeinheit, welcher die Messsignale des piezoelektrischen Sensors zugeführt sind, wobei die Auswerteeinheit zum Erfassen und Aufzeichnen von Messsignalen des piezoelektrischen Sensors vorzugsweise während eines Stellbetriebs des Weichenantriebs ausgebildet ist, wobei die Messsignale für eine nicht-periodische Veränderung der Dehnung des Gehäuses repräsentativ sind, und die Auswerteeinheit zum Auswerten eines zeitlichen Verlaufs der Messsignale ausgebildet ist, um Abweichungen von einem Sollzustand zu identifizieren.

12. Weichenantrieb nach Anspruch 11, **dadurch gekennzeichnet, dass** der piezoelektrische Sensor an einer Innenseite des Gehäuses angeordnet ist.

13. Weichenantrieb nach Anspruch 11 oder 12, **dadurch gekennzeichnet, dass** ein Tiefpassfilter mit einer Grenzfrequenz vorgesehen ist, bei welcher einem Körperschall entsprechende periodische, vorzugsweise eine Frequenz von > 100 Hz aufweisende, Signalanteile des piezoelektrischen Sensors zumindest teilweise entfernt oder gedämpft werden, um die die nicht-periodische Veränderung der Dehnung repräsentierenden Messsignale zu erhalten.

14. Weichenantrieb nach Anspruch 11, 12 oder 13, **dadurch gekennzeichnet, dass** ein Ladungsverstärker vorgesehen ist, welcher die die nicht-periodische Veränderung der Dehnung repräsentierenden Messsignale verstärkt.

15. Weichenantrieb nach einem der Ansprüche 11 bis 14, **dadurch gekennzeichnet, dass** die Auswerteeinheit ausgebildet ist, um die die nicht-periodische Veränderung der Dehnung repräsentierenden Messsignale durch Ermittlung quasistatischer Anteile des Sensorabgriffs zu erfassen.

16. Weichenantrieb nach einem der Ansprüche 11 bis 15, **dadurch gekennzeichnet, dass** die Auswerteeinheit ausgebildet ist, um eine Amplitude des zeitlichen Verlaufs der Messsignale zu ermitteln und mit einem Sollwert zu vergleichen.

17. Weichenantrieb nach einem der Ansprüche 11 bis 16, **dadurch gekennzeichnet, dass** die Auswerteeinheit ausgebildet ist, um aus den die nicht-periodische Veränderung der Dehnung repräsentierenden Messsignalen ein Maß für den Schwergang der Weiche zu ermitteln.

18. Weichenantrieb nach einem der Ansprüche 11 bis 17, **dadurch gekennzeichnet, dass** die Auswerteeinheit ausgebildet ist, um den zeitlichen Verlauf der Messsignale während einer Vielzahl von Stellbetrieben aufzuzeichnen und aus einem Vergleich der aufgezeichneten Verläufe ein Wartungsbedarf der Weiche, wie z.B. des Weichenantriebs, zu ermitteln.

19. Weichenantrieb nach einem der Ansprüche 11 bis 18, **dadurch gekennzeichnet, dass** die Auswerteeinheit ausgebildet ist, um zusätzlich Messsignale des piezoelektrischen Sensors zu erfassen und auszuwerten, welche Körperschallwellen repräsentieren.

20. Weichenantrieb nach einem der Ansprüche 11 bis 19, **dadurch gekennzeichnet, dass** ein Temperatursensor zur Erfassung der Temperatur des Gehäuses im Bereich des piezoelektrischen Sensors vorgesehen ist, dessen Temperaturmesswerte der Auswerteeinheit zur Kompensation von temperaturabhängigen Veränderungen der Messsignale des piezoelektrischen Sensors zugeführt sind.
